# DEMANDE DE BREVET EUROPEEN

(11) **EP 1 683 410 A1**
(43) Date de publication de la demande: **26.07.2006**
(21) Numéro de dépôt: 06356003.1
(22) Date de dépôt: 10.01.2006
(51) Int. Cl.: A01G 9/02, A01G 17/04

(54) **Pot pour plantes**

(30) Priorité: 24.01.2005 FR 0500781
(71) Demandeur: Guillemaut, Henri, 74380 Cranves Sales (FR); Faucher, Simone, 74100 Annemasse (FR)
(72) Inventeur: Guillemaut, Henri, 74380 Cranves Sales (FR); Faucher, Simone, 74100 Annemasse (FR)

(57) **Abrégé**

POTS POUR PLANTES EN PLUSIEURS PARTIES CONSTITUE D'UN TRONC DE CONE EN DEUX PARTIES (1) ATTACHEES ENTRE ELLES (3) POSE SUR SA GRANDE BASE, ET FIXE (6) DANS UNE ASSIETTE DE PLUS GRAND DIAMETRE A BORD RELEVE (2) QUI LUI ASSURE UNE BONNE STABILITE EN CAS DE VENTS. UN COLLIER (4) AVEC TREPIEDS (5) PERMET DE MAINTENIR LA PLANTE, AFIN DE SEPARER LES DEUX PARTIES DU TRONC DE CONE ET DE FACILITER LE DEPOTAGE EVENTUEL DES PLANTES VOLUMINEUSES ET LOURDES.

## Description

La présente invention concerne un dispositif permettant d'effectuer le dépotage des plantes volumineuses et lourdes. Les pots sont en général de forme tronconique, avec une petite base à la partie inférieure, ce qui les rends sensibles aux vents ; ils sont fréquemment en terre cuite, donc fragiles.

Les opérations de dépotage sont difficiles, étant donné le poids de la terre contenue dans le vase.

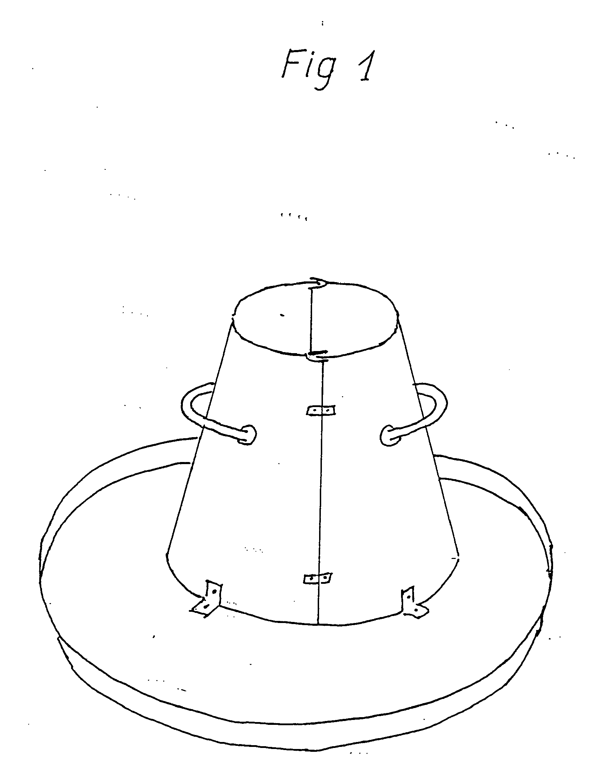

La présente invention propose un ustensile qui permet une opération de dépotage avec facilité Fig.1.

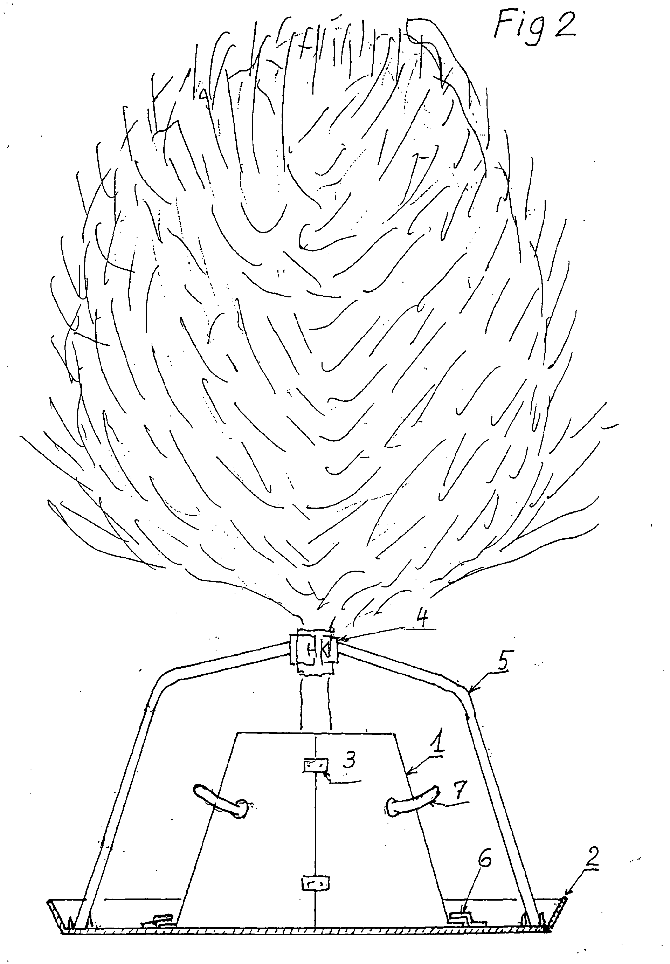

Il est constitué (fig.2) d'un vase tronconique en deux parties (1)attachées entre elles (3), ouvert aux deux extrémités, posé et fixé par sa grande base sur un réceptacle en forme d'assiette (2) de plus grand diamètre et à bord relevé (coupe partielle).

Un accessoire composé d'un collier (4) garni à l'intérieur de caoutchouc tendre et d'un trépied (5) adapté à ce collier.

L'opération de dépotage consiste à maintenir la plante dans sa position, à l'aide du collier et du trépied.
- Ouvrir le pot en séparant les attaches, et en utilisant les poignées (7)
- Retirer la terre à la main, celle-ci étant retenue dans l'assiette de base.
- Refermer le pot en attachant les deux demi parties entre elles et avec l'assiette.
- Remettre de la terre ou du terreau.
- Retirer le collier trépieds.

Ce système de pot offre des avantages :
Il est stable et résistant aux vents, grâce à son assiette qui offre une plus grande base de sustentation ; son centre de gravité est plus bas, il a davantage de volume pour les racines.
L'assiette retient l'eau d'arrosage en excédent.

Il est en matière thermo-plastique, incassable, d'autres matériaux peuvent être utilisés.

Les pots de formes géométriques différentes, à sections carrées rectangulaires, polygonales, peuvent être conçus de la même façon.

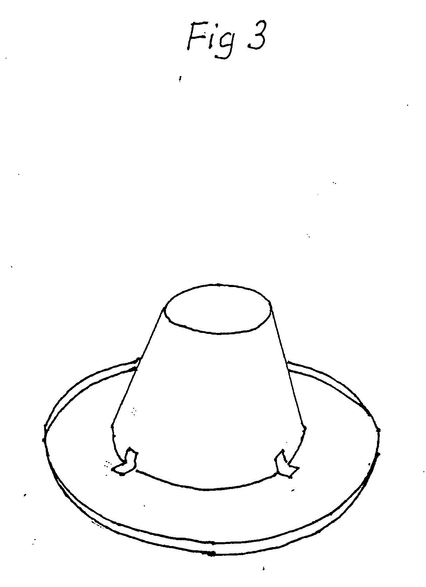

Les pots de petites dimensions peuvent se présenter en tronc de cône d'une seule partie attachée à l'assiette (Fig 3).

## Revendications

1. Dispositif permettant le dépotage facile des plantes volumineuses et lourdes (fig.2) **caractérisé par** un pot de forme tronconique en deux parties attachées entre elles (1) munies de poignées (7) ouvert aux deux extrémités. posé et fixé par sa grande base sur un réceptacle en forme d'assiette (2) de plus grand diamètre et à bord relevé . Un collier (4) adapté à un trépieds (5) permet de maintenir la plante dans sa position, afin de remplacer la terre avec facilité, après avoir séparé les deux demi parties du tronc de cône.

2. Dispositif selon la revendication 1 **caractérisé par** le système d'attaches entre les deux parties du pot et l'assiette de base.

3. Dispositif selon les revendications 1 et 2 **caractérisé par** la possibilité de concevoir de la même façon, les pots de formes géométriques différentes à sections carrées, rectangulaires, polygonales.

4. Dispositif selon les revendications précédentes **caractérisé par** une meilleure stabilité en cas de vents, grâce à son centre de gravité plus bas et son assiette de plus grand diamètre offrant une plus grande base de sustentation, et un plus grand volume pour les racines.
